(19) Europäisches Patentamt
European Patent Office
Office européen des brevets

(11) EP 4 517 601 A1

(12) **EUROPEAN PATENT APPLICATION**

(43) Date of publication:
**05.03.2025 Bulletin 2025/10**

(21) Application number: **24188807.2**

(22) Date of filing: **16.07.2024**

(51) International Patent Classification (IPC):
***G06N 5/01*** *(2023.01)* ***G06N 3/126*** *(2023.01)*
*G06N 10/60* *(2022.01)*

(52) Cooperative Patent Classification (CPC):
**G06N 5/01; G06N 3/126;** G06N 10/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 JP 2023140967**

(71) Applicant: **FUJITSU LIMITED**
**Kawasaki-shi, Kanagawa 211-8588 (JP)**

(72) Inventor: **MARUO, Akito**
**Kawasaki-shi, 211-8588 (JP)**

(74) Representative: **Haseltine Lake Kempner LLP**
**Cheapside House**
**138 Cheapside**
**London EC2V 6BJ (GB)**

# (54) OPERATION PROGRAM, OPERATION METHOD, AND INFORMATION PROCESSING APPARATUS

(57) An operation program including instructions for causing a computer to perform processing including: in repeatedly executing operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, generating types of a sequence as an initial point of each piece of learning data of the learning data group; when the first recommended points are searched for; and when the second recommended points are searched for, applying the genetic algorithm to a form of the sequence.

FIG. 6

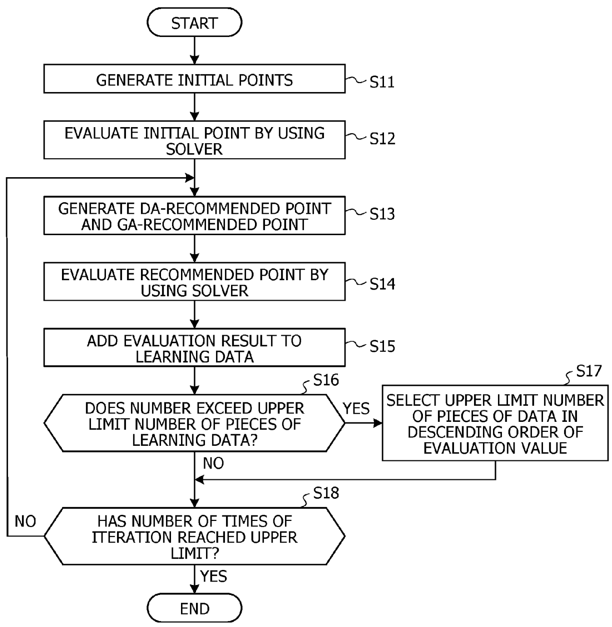


EP 4 517 601 A1

## Description

FIELD

The embodiment discussed herein is related to an operation program, an operation method, and an information processing apparatus.

BACKGROUND

A technique has been disclosed in which optimization is performed by performing sampling of binary variables.
Japanese Laid-open Patent Publication No. 2022-190752, Japanese Laid-open Patent Publication No. 2021-33544, and Japanese Laid-open Patent Publication No. 2022-45870 are disclosed as related art.

SUMMARY

TECHNICAL PROBLEM

For example, since a sampling technique using an Ising model in a quadratic unconstrained binary optimization (QUBO) format is a method of sequentially sampling recommended points in a model, there is a possibility that a sampling region is limited. Therefore, as a result, there is a possibility that the number of times of sampling increases.
It is desirable to provide an operation program, an operation method, and an information processing apparatus that may reduce the number of times of sampling.

SOLUTION TO PROBLEM

According to an aspect of the embodiments, there is provided an operation program including instructions which, when executed by a computer, cause the computer to perform processing including: in repeatedly executing operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, generating a plurality of types of a sequence as an initial point of each piece of learning data of the learning data group; when the first recommended points are searched for, searching for the first recommended points after a matrix of i and j is converted into a bit array of i and j in which a value that corresponds to the sequence is 1 and other values are 0 when an index of a variable in the sequence is i and an index that represents a type of the variable is j for the each piece of learning data, by providing a constraint that only one of variables of each row is 1 and only one of variables of each column is 1 in the matrix; and when the second recommended points are searched for, applying the genetic algorithm to a form of the sequence.

ADVANTAGEOUS EFFECTS OF INVENTION

The invention is described, by way of example only, with reference to the following drawings, in which:
The number of times of sampling may be reduced.

BRIEF DESCRIPTION OF DRAWINGS

FIG. 1 is a diagram exemplifying a search for a solution in a QUBO format;
FIG. 2 is a diagram illustrating evaluation values for movies watched by many users;
FIG. 3 is a flowchart illustrating an execution procedure in a sampling technique using a model in the QUBO format;
FIG. 4 is a diagram for describing an overview of a 2way1hot constraint;
FIG. 5A is a block diagram exemplifying an overall configuration of an information processing apparatus, and FIG. 5B is a block diagram exemplifying a hardware configuration of the information processing apparatus;
FIG. 6 is a flowchart illustrating an example of the operation of the information processing apparatus;
FIG. 7 is a flowchart illustrating the details of step S11;
FIG. 8 is a diagram illustrating one example of step S21 and step S22;
FIG. 9 is a diagram illustrating another example of step S21 and step S22;

FIG. 10 is a flowchart illustrating the details of step S13;
FIG. 11A is a diagram exemplifying crossover, and FIG. 11B is a diagram exemplifying mutation;
FIG. 12 is a diagram in which the processing of an embodiment is organized;
FIG. 13 is a diagram exemplifying a test problem;
FIG. 14 is a diagram illustrating the best values found in a search; and
FIG. 15A is a diagram illustrating the details of a result of a method using only FM-DA, and FIG. 15B is a diagram illustrating the details of a result of the method of the embodiment.

DESCRIPTION OF EMBODIMENTS

As a technique of searching for a good solution with a high evaluation value from a large number of combinations, order, or the like, a sampling technique of binary variables is used. As the sampling technique of binary variables, there are a sampling technique of randomly performing sampling, a sampling technique using an Ising model in the QUBO format, and the like.

The sampling technique of randomly performing sampling may easily perform sampling, but has a disadvantage that sampling efficiency is poor and the number of times of sampling increases in order to obtain a good solution with high accuracy.

For example, as the sampling technique using a model in the QUBO format, there are factorization machine with quantum annealing (FMQA) and the like. FMQA is a method in which quantum annealing (QA) and factorization machine (FM) (machine learning method) are combined. In the method of FMQA, an FM model in the QUBO format is created from learning data, a good solution is obtained by QA, an evaluation value of the good solution is analyzed by a solver, a result is added to the learning data, and sampling is performed interactively. Further, as the sampling technique using a model in the QUBO format, there is an FMDA technique. FMDA is obtained by replacing the QA portion of FMQA with a digital annealer (DA).

The QUBO format is quadratic unconstrained binary optimization, and is a format that is free from a quadratic constraint and enables binary optimization. For example, the QUBO format may be expressed as in the following formula. $x_i = 0$ or 1 ($i = 1, ..., N$). $W_{ij}$ is a coupling coefficient between $x_i$ and $x_j$. $b_i$ is a bias coefficient of $x_i$. The first term on the right side is a quadratic term and represents interaction. The second term on the right side is a linear term and represents a bias effect. The third term on the right side is a constant term. In the QUBO format, as exemplified in FIG. 1, good solution x for minimizing E(x) representing energy is searched for in accordance with the following formula.

$$E(\boldsymbol{x}) = -\sum_{i,j} W_{ij}x_i x_j - \sum_i b_i x_i + \text{const.}$$

As an example of the sampling technique using a model in the QUBO format, an overview of FMDA will be described. As an example, FIG. 2 illustrates evaluation values for movies watched by many users. These evaluation values are n-dimensional vectors. First, a model in the QUBO format for representing interaction is created from these evaluation values. A model in the QUBO format may be expressed as in the following formula.

$$\hat{y}(\boldsymbol{x}^{(k)}) := w_0 + \sum_{i=1}^{n} w_i x_i^{(k)} + \sum_{i=1}^{n} \sum_{j=i+1}^{n} \langle \boldsymbol{v}_i, \boldsymbol{v}_j \rangle x_i^{(k)} x_j^{(k)}$$

In the above formula, $w_0$, $w_i$, $v_i$, and $v_j$ are coefficients to be learned. This machine learning model is a model that is strong against a sparse data set. Since this model is in the QUBO format, a model in the QUBO format may be automatically generated by learning FM.

FIG. 3 is a flowchart illustrating an execution procedure in the sampling technique using a model in the QUBO format. As exemplified in FIG. 3, first, a learning data group is generated by randomly generating pieces of learning data (initial points) (step S1). The number of pieces of learning data to be generated is determined by the setting of a user.

Next, an evaluation value of an initial point is calculated by using a solver (step S2). An evaluation value is an indicator for determining whether an initial point or a recommended point to be described later is good. By the above-described steps, an initial learning data group in which an initial point and an evaluation value form a set is generated.

Next, a model in the QUBO format is created by generating FM from the learning data group (step S3). Since FM is in the QUBO format, generation of FM is equivalent to generation of a model in the QUBO format. Any other machine learning model may be used as long as a model in the QUBO format may be generated.

Next, optimization of the created model in the QUBO format is performed by using DA, and a good solution with the best evaluation value (DA-recommended point) is generated (step S4).

Next, an evaluation value of the DA-recommended point is calculated by using the solver (step S5).

Next, an evaluation result (a recommended point and evaluation value set) is added to the learning data group as learning data (step S6).

Next, it is determined whether the number of times of iteration has reached an upper limit (step S7). When "No" is determined in step S7, the processing is executed again from step S3. Accordingly, step S3 to step S6 are repeated until an end condition is satisfied. When "Yes" is determined in step S7, the execution of the flowchart ends. As the end condition, a condition such as a case where an amount of change in objective function is less than a threshold for a certain period of time may be used.

By the above-described procedure, the learning data group is updated, and an optimal solution may be obtained.

Although FMDA has been described in FIG. 3, the DA portion of FMDA may be replaced with QA, and any other method may be used as long as it is an Ising machine capable of solving QUBO. Besides using an Ising machine dedicated for solving QUBO, an Ising model may be solved by using software.

Since the sampling technique using a model in the QUBO format is a method of sequentially sampling recommended points in a model, there is a possibility that a sampling region is limited. In the sampling technique using a model in the QUBO format, sampling performance depends on a learning data group for model generation. Since FM is a quadratic model, there is a possibility that a problem may not be fully expressed. In a case where a plurality of recommendation methods is used, it is difficult to adjust the number of recommendations. From the above, the number of times of sampling increases in order to increase the accuracy of searching for an optimal solution.

Accordingly, it is conceivable that search efficiency is improved by using a penalty method. The penalty method is a method of obtaining an approximate solution while avoiding a constraint violation by imposing a numerical penalty (deteriorating an objective function) when a constraint condition is violated in a problem having the constraint condition. As an example, it is conceivable that a 2way1hot constraint is used for generation of initial points. FIG. 4 is a diagram for describing an overview of the 2way1hot constraint. As exemplified in FIG. 4, in the 2waylhot constraint, in a case where $x_i$ and $x_j$ are represented as a matrix, $x_i$ and $x_j$ are set such that only one state variable among the variables of each row is 1 and only one state variable among the variables of each column is 1.

However, when the 2waylhot constraint is used, since a solution that violates the 2way1hot constraint is generated during a search for a solution, there is a possibility that the efficiency of searching for a solution deteriorates. As a result, there is a possibility that the solution to be searched for falls into a local solution. Accordingly, in the following embodiment, description will be given for an example in which the number of times of sampling may be reduced while avoiding a local solution even when the 2way1hot constraint is applied.

[First Embodiment]

FIG. 5A is a block diagram exemplifying an overall configuration of an information processing apparatus 100. As exemplified in FIG. 5A, the information processing apparatus 100 includes a storing unit 10, an initial point generation unit 20, an evaluation unit 30, an FMDA execution unit 40, a genetic algorithm (GA) execution unit 50, a learning data update unit 60, an output unit 70, and the like.

FIG. 5B is a block diagram illustrating a hardware configuration of the information processing apparatus 100. As exemplified in FIG. 5B, the information processing apparatus 100 includes a central processing unit (CPU) 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program executed by the CPU 101, data processed by the CPU 101, and the like. The storage device 103 is a nonvolatile storage device. As the storage device 103, for example, a read-only memory (ROM), a solid-state drive (SSD) such as a flash memory, a hard disk to be driven by a hard disk drive, or the like may be used. The storage device 103 stores an operation program. The input device 104 is an input device such as a keyboard or a mouse. The display device 105 is a display device such as a liquid crystal display (LCD). By the CPU 101 executing the operation program, the storing unit 10, the initial point generation unit 20, the evaluation unit 30, the FMDA execution unit 40, the GA execution unit 50, the learning data update unit 60, the output unit 70, and the like are realized. Hardware such as dedicated circuits may be used as the storing unit 10, the initial point generation unit 20, the evaluation unit 30, the FMDA execution unit 40, the GA execution unit 50, the learning data update unit 60, the output unit 70, and the like.

FIG. 6 is a flowchart illustrating an example of the operation of the information processing apparatus 100. As exemplified in FIG. 6, the initial point generation unit 20 generates a learning data group by generating initial points of learning data (step S11). The number of pieces of learning data to be generated is determined by the setting of a user.

FIG. 7 is a flowchart illustrating the details of step S11. As exemplified in FIG. 7, the initial point generation unit 20 randomly generates initial points having information on a sequence as many as the number of initial points (step S21). The sequences are different from each other. Next, the initial point generation unit 20 converts the initial points generated in step S21 into a bit array (step S22). After that, the flowchart of FIG. 7 ends.

FIG. 8 is a diagram illustrating one example of step S21 and step S22. As exemplified in the upper left diagram of FIG. 8, one initial point is generated in the form of a sequence. "i" is an index of a variable in the sequence. In this case, "j" is an index representing the type of a variable. In the example of the upper left diagram of FIG. 8, a sequence is generated in which "j" is arranged in order from 1 to 10 when "i" is arranged in order from 1 to 10. This sequence is converted into a bit matrix as in the right diagram of FIG. 8. In the example of FIG. 8, "1" when $i = j$, and "0" when $i \neq j$. As in the lower left diagram, the obtained bit matrix is converted into a bit array.

FIG. 9 is a diagram illustrating another example of step S21 and step S22. As exemplified in the upper left diagram of FIG. 9, one initial point is generated in the form of a sequence. In the example of the upper left diagram of FIG. 9, a sequence is generated in which "j" is arranged in order of "2, 1, 4, 3, 6, 5, 8, 7, 10, 9" when "i" is arranged in order from 1 to 10. This sequence is converted into a bit matrix as in the right diagram of FIG. 9. "1" when (i, j) = (1, 2), (2, 1), (3, 4), (4, 3), (5, 6), (6, 5), (7, 8), (8, 7), (9, 10), and (10, 9), and "0" in other cases. As in the lower left diagram, the obtained bit matrix is converted into a bit array.

Such initial points as described above are generated as many as the number determined by the setting of a user.

FIG. 6 is referred to again. Next, the evaluation unit 30 calculates an evaluation value of each initial point by using a solver (step S12). The evaluation unit 30 calculates an evaluation value for a bit array generated from a sequence. The obtained evaluation values are reflected in the evaluation value field in FIG. 8 and FIG. 9. An initial learning data group in which the initial point obtained in step S11 and the evaluation value calculated in step S12 form a set, is stored in the storing unit 10. Each learning data group includes a set of information on a sequence, information on a bit array, and evaluation values.

Next, the FMDA execution unit 40 generates a DA-recommended point, and the GA execution unit 50 generates a GA-recommended point (step S13).

FIG. 10 is a flowchart illustrating the details of step S13. As exemplified in FIG. 10, the FMDA execution unit 40 generates a model in the QUBO format by generating FM based on the learning data group stored in the storing unit 10 (step S31). The FMDA execution unit 40 generates FM by using a bit array. Since FM is in the QUBO format, generation of FM is equivalent to generation of a model in the QUBO format. Any other machine learning model may be used as long as a model in the QUBO format may be generated.

Next, the FMDA execution unit 40 calculates determination coefficient $R^2$ of the FM model for the learning data group (step S32). Determination coefficient $R^2$ is an indicator of model accuracy, and represents that, as the determination coefficient is closer to 1, the accuracy of searching for a good solution with a high evaluation value is higher. For example, determination coefficient $R^2$ may be calculated by the following formula.

$$R^2 = 1 - \frac{\sum_{i=1}^{n}(y_i - \hat{y})^2}{\sum_{i=1}^{n}(y_i - \bar{y})^2}$$

In the formula, $y_i$ is an actual measurement value. The following formula is a prediction value.

$\hat{y}$

The following formula is an average value of actual measurement values.

$\bar{y}$

Next, the FMDA execution unit 40 determines whether determination coefficient $R^2$ is equal to or larger than threshold $\delta$ (step S33). Threshold $\delta$ is set in advance by a user. An example of threshold $\delta$ will be described. For example, threshold $\delta$ is set to about 0.8 when step S33 is executed for the first time. Preferably, the value of threshold $\delta$ is small when DA recommendation works effectively, and the value of threshold $\delta$ is large when DA recommendation does not work effectively. For example, whether DA-recommendation works effectively may be determined depending on whether a rate of determination of "Yes" in step S33 is equal to or larger than a threshold.

When "Yes" is determined in step S33, the FMDA execution unit 40 generates as many DA-recommended points as the number of DA-set recommendations by QUBO optimization by DA of the 2way1hot constraint (step S34). The number of DA-set recommendations is set in advance by a user. A DA-recommended point is a good solution (recommended point) with the best evaluation value. Alternatively, a DA-recommended point is a good solution (recommended point) with an evaluation value equal to or larger than a threshold. Alternatively, a DA-recommended point is a good solution (recommended point) with an evaluation value up to a predetermined ranking from the top. In DA of the 2way1hot constraint, a search that avoids a constraint violation may be performed by using a constraint condition at the time of selecting an inversion bit and simultaneously inverting four bits at the time of 2way1hot.

After that, the GA execution unit 50 sets the number of GA recommendations to be the number of GA-set recommendations (step S35).

When "No" is determined in step S33, the GA execution unit 50 sets the number of GA recommendations to be (the number of GA-set recommendations + the number of DA-set recommendations) (step S36). The number of GA-set recommendations is set in advance by a user. The number of GA recommendations does not have to be (the number of GA-set recommendations + the number of DA-set recommendations), and may be a number larger than the number of GA recommendations.

After the execution of step S35 or after the execution of step S36, the GA execution unit 50 selects as many parent individuals as the number of GA recommendations from the learning data group stored in the storing unit 10 (step S37). The method of selecting parent individuals is not particularly limited. For example, there is a method of randomly extracting individuals of a number exceeding the number of GA recommendations (tournament size $N_T$) from a learning data group, and selecting as many individuals as the number of GA recommendations with high evaluation from among the individuals (tournament selection). Alternatively, as many individuals as the number of GA recommendations with the highest evaluation may be selected from a learning data group (elite selection). Tournament size $N_T$ is set in advance by a user.

Next, the GA execution unit 50 generates, from the parent individuals, as many child individuals (GA-recommended points) as the number of GA recommendations, by crossover and mutation of an order-type GA (step S38). In this case, the GA execution unit 50 uses information on a sequence included in each piece of learning data.

FIG. 11A is a diagram exemplifying crossover. For example, one or more elements "j" of the same "i" are set as crossover points for parent individual A and parent individual B. Next, the crossover points of parent individual A and the crossover points of parent individual B are exchanged. Next, those that do not cause a conflict with those in the crossover points are determined. In the example of FIG. 11A, "*" is added to those that do not cause a conflict. Next, the map of the exchange is referred to, and the rest is determined such that no conflict is caused. FIG. 11B is a diagram exemplifying mutation. First, two "i" are randomly selected. Next, the elements "j" of the two selected "i" are exchanged. A crossover probability and a mutation probability are set in advance by a user.

FIG. 10 is referred to again. The GA execution unit 50 converts the information on the sequence of the GA-recommended points generated in step S38 into a bit array as described with reference to FIG. 8 and FIG. 9 (step S39).

Next, the GA execution unit 50 determines whether the recommended points obtained in step S39 are points that have already been searched for (step S40).

When it is determined that the recommended points obtained in step S39 are points that have already been searched for (i.e., in a case where "Yes" is determined in step S40), recommended points that have been searched for are excluded, and the number of deleted points is set as the number of GA recommendations (step S41). After that, the processing is executed again from step S37. Accordingly, GA-recommended points may be generated by excluding the recommended points that have been searched for. When it is determined that the recommended points obtained in step S39 are not points that have already been searched for (i.e., in a case where "No" is determined in step S40), the execution of the flowchart of FIG. 10 ends.

FIG. 6 is referred to again. Next, the evaluation unit 30 calculates an evaluation value of a recommended point by using the solver (step S14). Recommended points in this case are DA-recommended points and GA-recommended points when step S36 is executed, and are GA-recommended points when step S35 is executed.

Next, the learning data update unit 60 adds an evaluation result (a recommended point and evaluation value set) to the learning data group as learning data (step S15). Each learning data group includes a set of information on a sequence, information on a bit array, and evaluation values.

Next, the learning data update unit 60 determines whether the number of pieces of learning data in the learning data group exceeds an upper limit number (step S16). An upper limit number of the number of pieces of learning data is set in advance by a user.

When "Yes" is determined in step S16, the learning data update unit 60 selects the upper limit number of pieces of learning data in descending order of evaluation value, and deletes learning data other than the selected learning data (step S17). Alternatively, the learning data update unit 60 may select learning data in which an evaluation value is equal to or larger than a predetermined value, and delete learning data other than the selected learning data.

When "No" is determined in step S16 or after the execution of step S17, the FMDA execution unit 40 determines whether the number of times of iteration has reached an upper limit (step S18). The number of times of execution of step S18 may be set as the number of times of iteration. An upper limit number of the number of times of iteration is set in advance by a user.

When "No" is determined in step S18, the processing is executed again from step S13. When "Yes" is determined in step S18, the execution of the flowchart ends.

The output unit 70 outputs a result of the processing of FIG. 6. For example, the output result is displayed by the display device 105. For example, the output unit 70 may output the contents of a learning data group and may output learning data with a high evaluation value in the learning data group as a good solution.

FIG. 12 is a diagram in which the processing of the present embodiment is organized. As exemplified in FIG. 12, initial points are randomly generated in the form of a sequence, and then the generated initial points are converted into a form satisfying the 2way1hot constraint by being converted into a bit array. An evaluation value is calculated for each piece of learning data. An obtained learning data set of the sequence and evaluation values is stored.

Next, QUBO is generated by machine learning as in the following formula.

$$H = \sum_{i=1}^{N} \sum_{j=1}^{N} Q_{ij} x_i x_j$$

Next, the 2way1hot constraint is set at the time of solution finding of DA, and an optimal value of an FM model (QUBO) satisfying the 2way1hot constraint is searched for. Accordingly, a DA-recommended point satisfies the 2way1hot constraint.

On the other hand, learning data is treated as a population, and recommended points are generated by using order type GA processing (selection, crossover, and mutation). Since GA-recommended points are sequence information, the GA-recommended points are converted into a bit array after generation. By processing in individual representation of a sequence, the recommended points satisfy the 2way1hot constraint.

According to the present embodiment, the number of DA-set recommendations and the number of GA-set recommendations are determined according to the accuracy of an FM model generated from a learning data group. Accordingly, both high accuracy for obtaining a good solution and reduction in the number of times of sampling may be achieved.

For example, in a case where the accuracy of an FM model generated from a learning data group is low, there is a possibility that the accuracy of searching for a good solution in DA is low. Accordingly, the number of GA recommendations is increased without performing DA recommendation. By using GA, it is possible to treat learning data as a population and generate recommended points by using GA processing. Accordingly, a region in which an evaluation value is likely to be good may be sampled in a wide range. In this case, since DA recommendation with low accuracy is not performed, as a result, a good solution may be obtained with high accuracy with a small number of times of sampling.

For example, in a case where the accuracy of an FM model generated from a learning data group is high, a good solution in an FM model may be generated by DA as a recommended point. In this case, a region in which an evaluation value is high may be actively sampled. Accordingly, the number of times of sampling for obtaining a good solution may be reduced.

From the above, according to the present embodiment, both high accuracy for obtaining a good solution and reduction in the number of times of sampling may be achieved.

In the present embodiment, a learning data group in the form satisfying the 2way1hot constraint may be generated by generating initial points in the form of a sequence. The 2way1hot constraint may be satisfied by providing a constraint satisfying the 2way1hot constraint in DA optimization. A learning data group in the form satisfying the 2way1hot constraint may be generated by using an order type GA in GA optimization. From the above, the 2way1hot constraint may be satisfied, and falling into a local solution may be reduced in optimization.

The accuracy of modeling used for sampling may be improved by updating a learning data group according to the evaluation value of each piece of learning data included in the learning data group when the number of pieces of data in the learning data group exceeds an upper limit number.

(Simulation Result)

Hereinafter, description will be given for a simulation result obtained by setting a virtual problem and performing operation processing according to the above embodiment. FIG. 13 is a diagram exemplifying a test problem. In this test problem, a deviation degree between a target sequence and a solution is defined as a score. In the example of FIG. 13, target values are determined for four indices of v0, v1, v2, and v3. Among the evaluation points of v0, v1, v2, and v3 of a certain solution, there are three evaluation points different from the target value. Since this number is set as the deviation degree, score value E is 3 in the example of FIG. 13.

For this test problem, sampling was performed using two types of methods, FMDA using the penalty method and the method of the present embodiment. As common settings, the number of variables is 25 and the number of used bits is 625. By setting the number of initial points to 150, the number of initial points is made smaller than that of used bits. In FMDA using the penalty method, the following formula was applied for the test problem in FIG. 13. Nv is the number of variables, and $x_{ij} \in \{0, 1\}$. $\alpha = 1/Nv^2$, $\beta = 1$, and C = Nv. The penalty term has a positive value in the case of a constraint violation.

$$E' = \begin{cases} E, \text{ if when 2way1hot constraint is satisfied} \\ \alpha\left(\sum_i \left|\sum_j x_{ij} - 1\right|^{\beta} + \sum_j \left|\sum_i x_{ij} - 1\right|^{\beta}\right) + C, else \end{cases}$$

FIG. 14 is a diagram illustrating the best values found in a search. The vertical axis represents energy E in the QUBO format. Accordingly, the vertical axis indicates that a better result is obtained as the value is smaller. The number of times of analysis of the horizontal axis indicates the number of times of iteration. As illustrated in FIG. 14, it may be seen that an optimal solution may be found with a small number of times of analysis in the present embodiment.

FIG. 15A is a diagram illustrating the details of a result of the method using only FM-DA. In FIG. 15A, an evaluation value (energy E) of each obtained solution is plotted. As illustrated in FIG. 15A, it may be seen that convergence to a local solution occurs in FM-DA. This is considered to be because a large number of constraint violation points are generated in the penalty method.

By contrast, FIG. 15B is a diagram illustrating the details of a result of the method of the present embodiment. As illustrated in FIG. 15B, in the present embodiment, optimization may be searched for with a small number of times of analysis. This is considered to be because a constraint violation during the search may be avoided.

In the above example, the initial point generation unit 20 is an example of an initial point generation unit that generates a plurality of types of sequences as an initial point of each piece of learning data of a learning data group. The FMDA execution unit 40 and the GA execution unit 50 are examples of an execution unit that, when a first recommended point is searched for, searches for a first recommended point after a matrix of i and j is converted into a bit array of i and j in which the value corresponding to a sequence is 1 and the other values are 0 when an index of a variable in the sequence is i and an index representing the type of a variable is j for each piece of learning data, by providing a constraint that only one of the variables of each row is 1 and only one of the variables of each column is 1 in the matrix, and when a second recommended point is searched for, applies a genetic algorithm to the form of a sequence. The learning data update unit 60 is an example of an update unit that updates a learning data group according to the evaluation value of each piece of learning data when the number of pieces of learning data in the learning data group exceeds an upper limit.

Although the embodiment of the present disclosure has been described in detail above, the present disclosure is not limited to such particular embodiment and may be variously modified and changed within the scope of the gist of the present disclosure described in claims.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

**1.** An operation program comprising instructions which, when executed by a computer, cause the computer to perform processing comprising:

in repeatedly executing operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data,

generating a plurality of types of a sequence as an initial point of each piece of learning data of the learning data group;

when the first recommended points are searched for, searching for the first recommended points after a matrix of i and j is converted into a bit array of i and j in which a value that corresponds to the sequence is 1 and other values are 0 when an index of a variable in the sequence is i and an index that represents a type of the variable is j for the each piece of learning data, by providing a constraint that only one of variables of each row is 1 and only one of variables of each column is 1 in the matrix; and
when the second recommended points are searched for, applying the genetic algorithm to a form of the sequence.

2. The operation program according to claim 1, the processing further comprising:
searching for other of the second recommended points when the second recommended points that are searched for are included in the learning data group.

3. The operation program according to claim 1 or 2, the processing further comprising:
determining the first set number and the second set number according to an accuracy of the Ising model.

4. The operation program according to any of the preceding claims, the processing further comprising:
searching for the second recommended points by increasing the second set number without searching for the first recommended points when an accuracy of the Ising model is less than a threshold.

5. The operation program according to any of claims 1 to 3, the processing further comprising:
searching for the second recommended points by setting a sum of the first set number and the second set number to the second set number, without searching for the first recommended points, when an accuracy of the Ising model is less than a threshold.

6. The operation program according to any of claims 1 to 3, the processing further comprising:
searching for the first recommended points and the second recommended points without changing the first set number and the second set number when an accuracy of the Ising model is equal to or more than a threshold.

7. The operation program according to any of the preceding claims, wherein

an upper limit is provided for a number of pieces of the learning data in the learning data group, and
the processing further comprises
updating the learning data group according to an evaluation value of each piece of the learning data when a number of pieces of the learning data in the learning data group exceeds the upper limit.

8. The operation program according to claim 7, the processing further comprising:
deleting other pieces of the learning data while leaving the upper limit number of pieces of the learning data in the learning data group in descending order of evaluation value when a number of pieces of the learning data in the learning data group exceeds the upper limit.

9. An operation method implemented by a computer, the operation method comprising:

in repeatedly executing operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data,
generating a plurality of types of a sequence as an initial point of each piece of learning data of the learning data group;
when the first recommended points are searched for, searching for the first recommended points after a matrix of i and j is converted into a bit array of i and j in which a value that corresponds to the sequence is 1 and other values are 0 when an index of a variable in the sequence is i and an index that represents a type of the variable is j for the each piece of learning data, by providing a constraint that only one of variables of each row is 1 and only one of variables of each column is 1 in the matrix; and
when the second recommended points are searched for, applying the genetic algorithm to a form of the sequence.

10. An information processing apparatus comprising:

a memory; and
a processor circuit coupled to the memory, the processor circuit being configured to perform processing comprising:

in repeatedly executing operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data,

generating a plurality of types of a sequence as an initial point of each piece of learning data of the learning data group;

when the first recommended points are searched for, searching for the first recommended points after a matrix of i and j is converted into a bit array of i and j in which a value that corresponds to the sequence is 1 and other values are 0 when an index of a variable in the sequence is i and an index that represents a type of the variable is j for the each piece of learning data, by providing a constraint that only one of variables of each row is 1 and only one of variables of each column is 1 in the matrix; and

when the second recommended points are searched for, applying the genetic algorithm to a form of the sequence.

FIG. 1

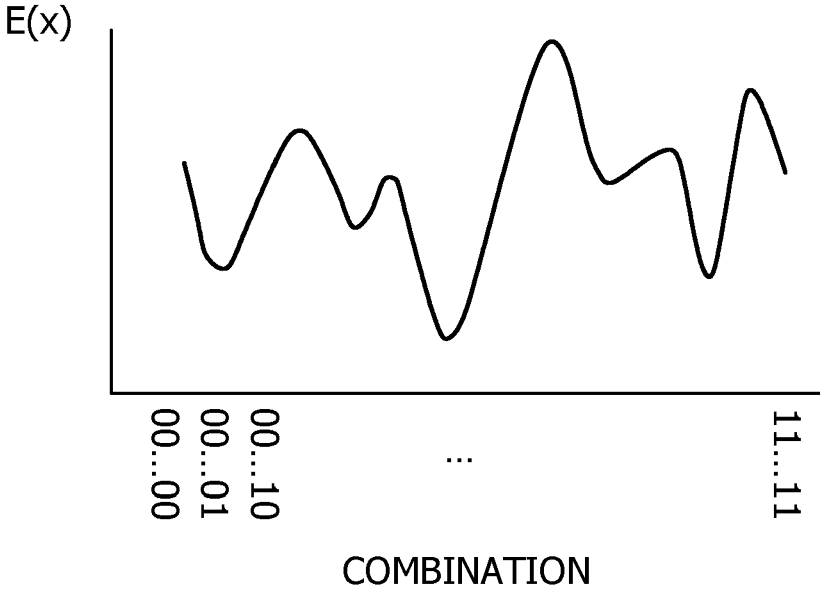

FIG. 2

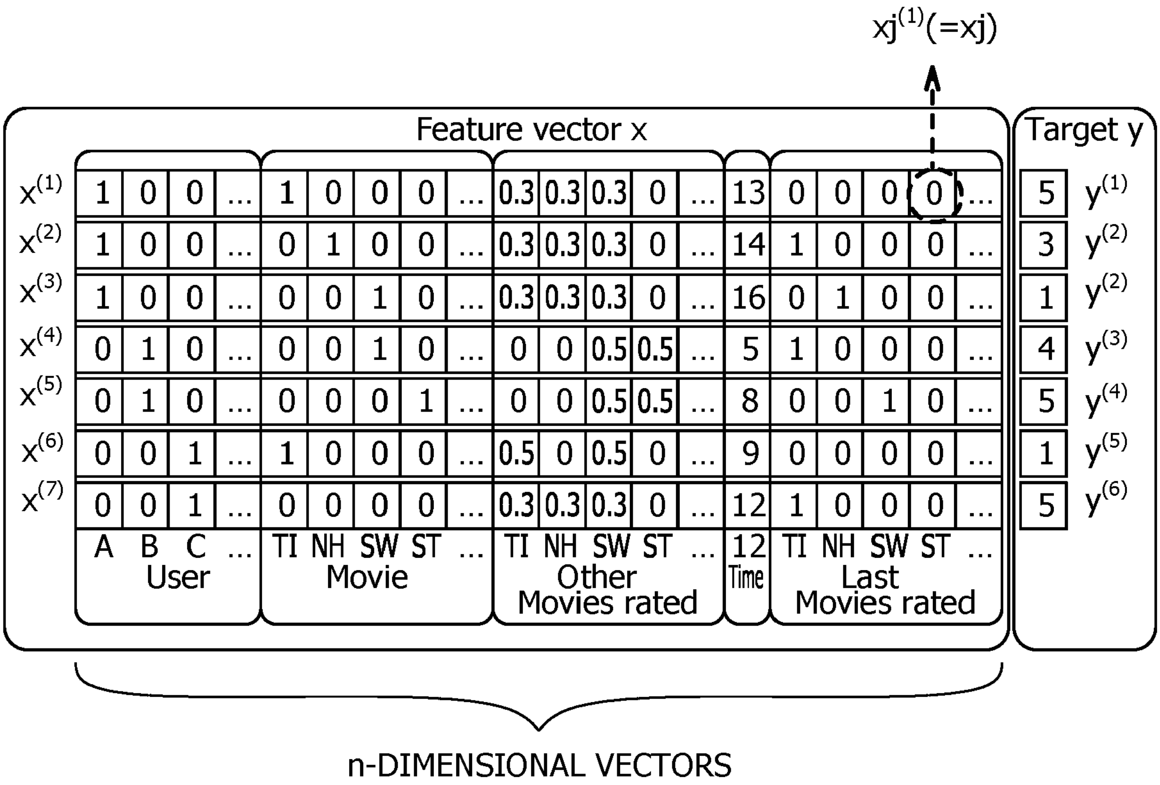
xj(1)(=xj)
Feature vector x
Target y
x(1) x(2) x(3) x(4) x(5) x(6) x(7)
y(1) y(2) y(2) y(3) y(4) y(5) y(6)
A B C ...
User
TI NH SW ST ...
Movie
TI NH SW ST ...
Other Movies rated
Time
TI NH SW ST ...
Last Movies rated
n-DIMENSIONAL VECTORS

FIG. 3

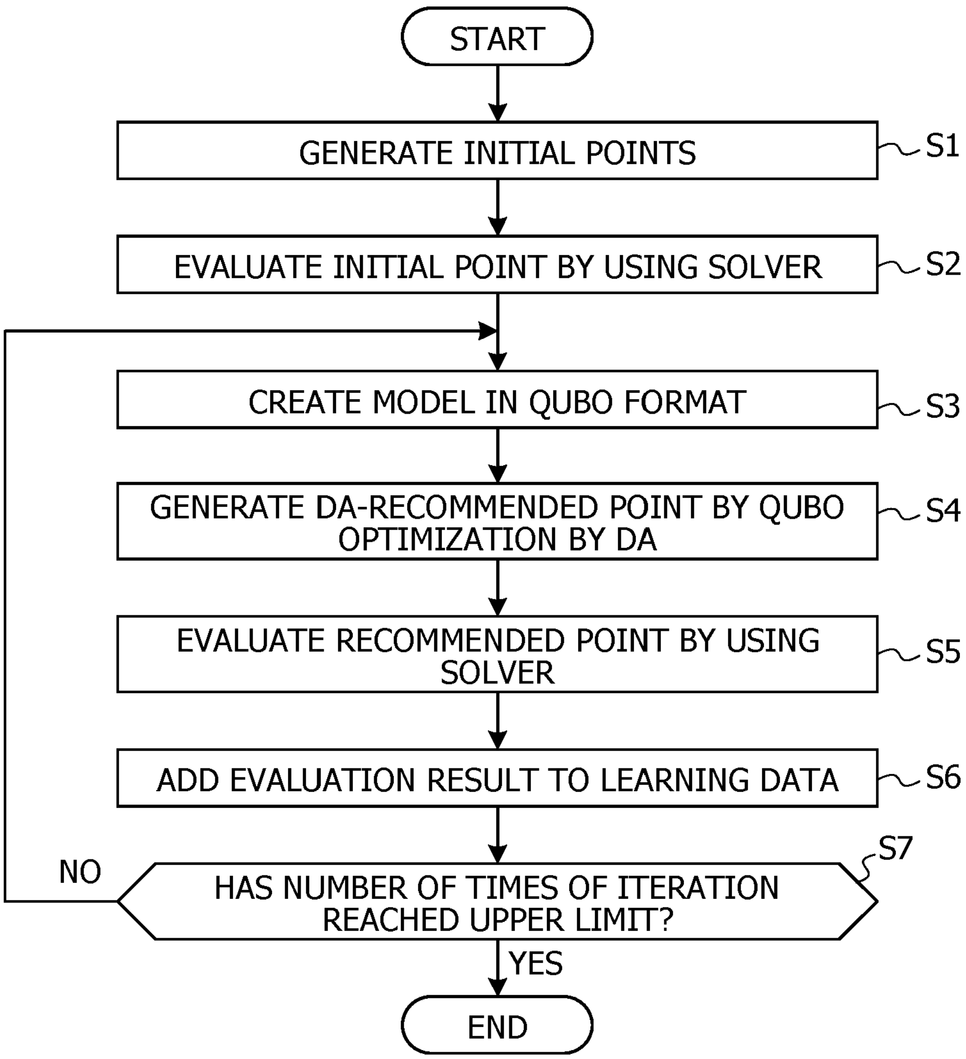
START
GENERATE INITIAL POINTS
S1
EVALUATE INITIAL POINT BY USING SOLVER
S2
CREATE MODEL IN QUBO FORMAT
S3
GENERATE DA-RECOMMENDED POINT BY QUBO OPTIMIZATION BY DA
S4
EVALUATE RECOMMENDED POINT BY USING SOLVER
S5
ADD EVALUATION RESULT TO LEARNING DATA
S6
HAS NUMBER OF TIMES OF ITERATION REACHED UPPER LIMIT?
S7
NO
YES
END

# FIG. 4

xij

j

i

| | 1 | 2 | 3 | 4 | 5 | 6 | 7 | 8 | 9 | 10 | TOTAL |
|---|---|---|---|---|---|---|---|---|---|---|---|
| 1 | 1 | 0 | 0 | 0 | 0 | 0 | 0 | 0 | 0 | 0 | 1 |
| 2 | 0 | 1 | 0 | 0 | 0 | 0 | 0 | 0 | 0 | 0 | 1 |
| 3 | 0 | 0 | 1 | 0 | 0 | 0 | 0 | 0 | 0 | 0 | 1 |
| 4 | 0 | 0 | 0 | 1 | 0 | 0 | 0 | 0 | 0 | 0 | 1 |
| 5 | 0 | 0 | 0 | 0 | 1 | 0 | 0 | 0 | 0 | 0 | 1 |
| 6 | 0 | 0 | 0 | 0 | 0 | 1 | 0 | 0 | 0 | 0 | 1 |
| 7 | 0 | 0 | 0 | 0 | 0 | 0 | 1 | 0 | 0 | 0 | 1 |
| 8 | 0 | 0 | 0 | 0 | 0 | 0 | 0 | 1 | 0 | 0 | 1 |
| 9 | 0 | 0 | 0 | 0 | 0 | 0 | 0 | 0 | 1 | 0 | 1 |
| 10 | 0 | 0 | 0 | 0 | 0 | 0 | 0 | 0 | 0 | 1 | 1 |
| TOTAL | 1 | 1 | 1 | 1 | 1 | 1 | 1 | 1 | 1 | 1 | |

FIG. 5A

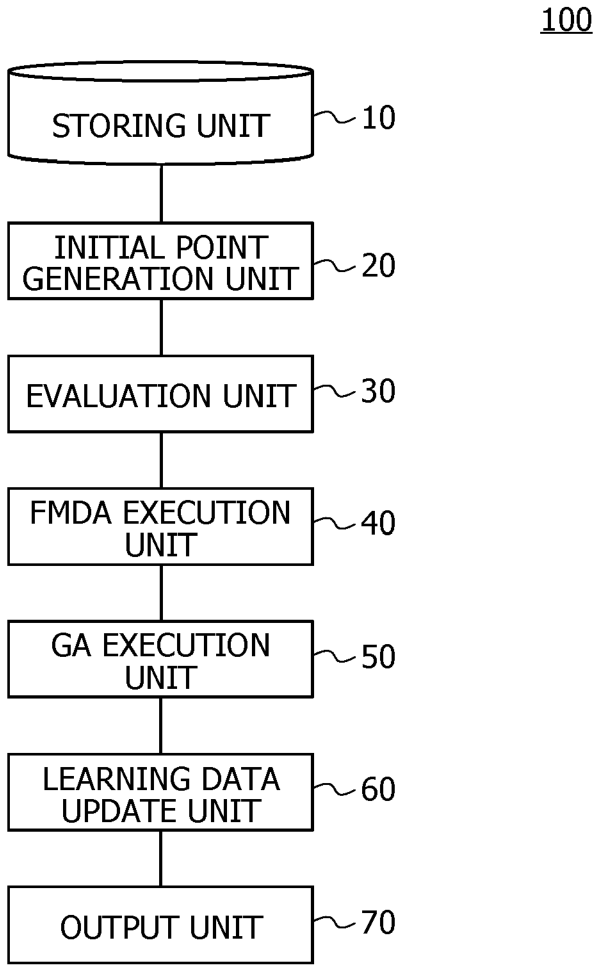
100
STORING UNIT
10
INITIAL POINT GENERATION UNIT
20
EVALUATION UNIT
30
FMDA EXECUTION UNIT
40
GA EXECUTION UNIT
50
LEARNING DATA UPDATE UNIT
60
OUTPUT UNIT
70

FIG. 5B

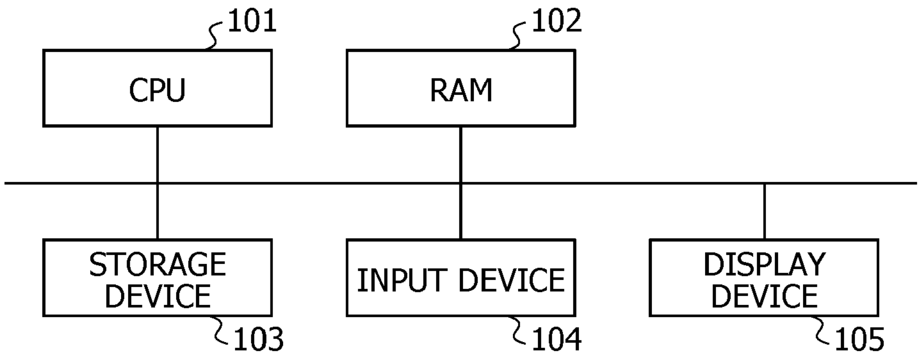
101
102
CPU
RAM
STORAGE DEVICE
INPUT DEVICE
DISPLAY DEVICE
103
104
105

FIG. 6

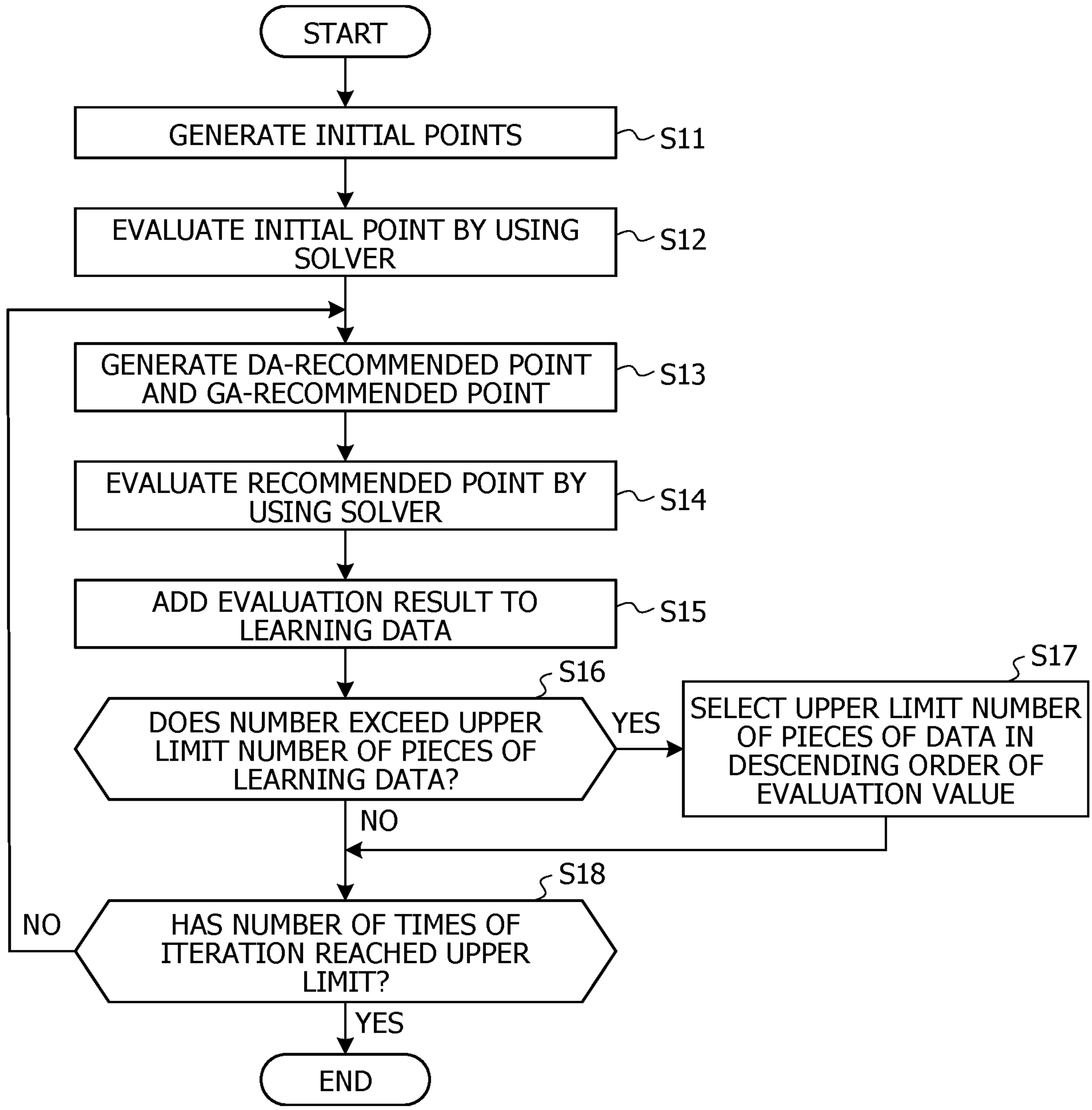
START
GENERATE INITIAL POINTS
S11
EVALUATE INITIAL POINT BY USING SOLVER
S12
GENERATE DA-RECOMMENDED POINT AND GA-RECOMMENDED POINT
S13
EVALUATE RECOMMENDED POINT BY USING SOLVER
S14
ADD EVALUATION RESULT TO LEARNING DATA
S15
S16
DOES NUMBER EXCEED UPPER LIMIT NUMBER OF PIECES OF LEARNING DATA?
YES
S17
SELECT UPPER LIMIT NUMBER OF PIECES OF DATA IN DESCENDING ORDER OF EVALUATION VALUE
NO
S18
HAS NUMBER OF TIMES OF ITERATION REACHED UPPER LIMIT?
NO
YES
END

FIG. 7

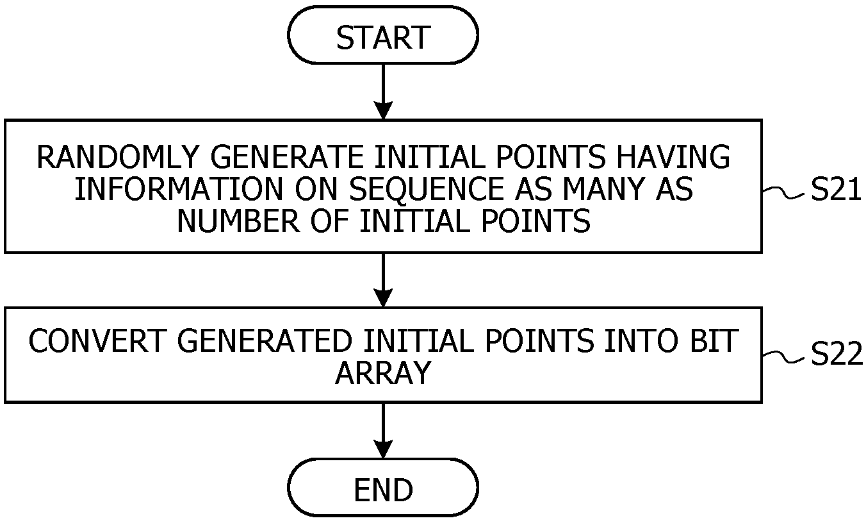
START
RANDOMLY GENERATE INITIAL POINTS HAVING INFORMATION ON SEQUENCE AS MANY AS NUMBER OF INITIAL POINTS
S21
CONVERT GENERATED INITIAL POINTS INTO BIT ARRAY
S22
END

FIG. 8

i

| No. | EVALUATION VALUE | 1 | 2 | 3 | 4 | 5 | 6 | 7 | 8 | 9 | 10 |
|---|---|---|---|---|---|---|---|---|---|---|---|
| 1 | xxx | 1 | 2 | 3 | 4 | 5 | 6 | 7 | 8 | 9 | 10 |

SEQUENCE

xij

j

i

| | 1 | 2 | 3 | 4 | 5 | 6 | 7 | 8 | 9 | 10 | TOTAL |
|---|---|---|---|---|---|---|---|---|---|---|---|
| 1 | 1 | 0 | 0 | 0 | 0 | 0 | 0 | 0 | 0 | 0 | 1 |
| 2 | 0 | 1 | 0 | 0 | 0 | 0 | 0 | 0 | 0 | 0 | 1 |
| 3 | 0 | 0 | 1 | 0 | 0 | 0 | 0 | 0 | 0 | 0 | 1 |
| 4 | 0 | 0 | 0 | 1 | 0 | 0 | 0 | 0 | 0 | 0 | 1 |
| 5 | 0 | 0 | 0 | 0 | 1 | 0 | 0 | 0 | 0 | 0 | 1 |
| 6 | 0 | 0 | 0 | 0 | 0 | 1 | 0 | 0 | 0 | 0 | 1 |
| 7 | 0 | 0 | 0 | 0 | 0 | 0 | 1 | 0 | 0 | 0 | 1 |
| 8 | 0 | 0 | 0 | 0 | 0 | 0 | 0 | 1 | 0 | 0 | 1 |
| 9 | 0 | 0 | 0 | 0 | 0 | 0 | 0 | 0 | 1 | 0 | 1 |
| 10 | 0 | 0 | 0 | 0 | 0 | 0 | 0 | 0 | 0 | 1 | 1 |
| TOTAL | 1 | 1 | 1 | 1 | 1 | 1 | 1 | 1 | 1 | 1 | |

i-j

| No. | EVALUATION VALUE | 1-1 | 1-2 | 1-3 | ··· | 10-8 | 10-8 | 10-10 |
|---|---|---|---|---|---|---|---|---|
| 1 | xxx | 1 | 0 | 0 | ··· | 0 | 0 | 1 |

BIT ARRAY

FIG. 9

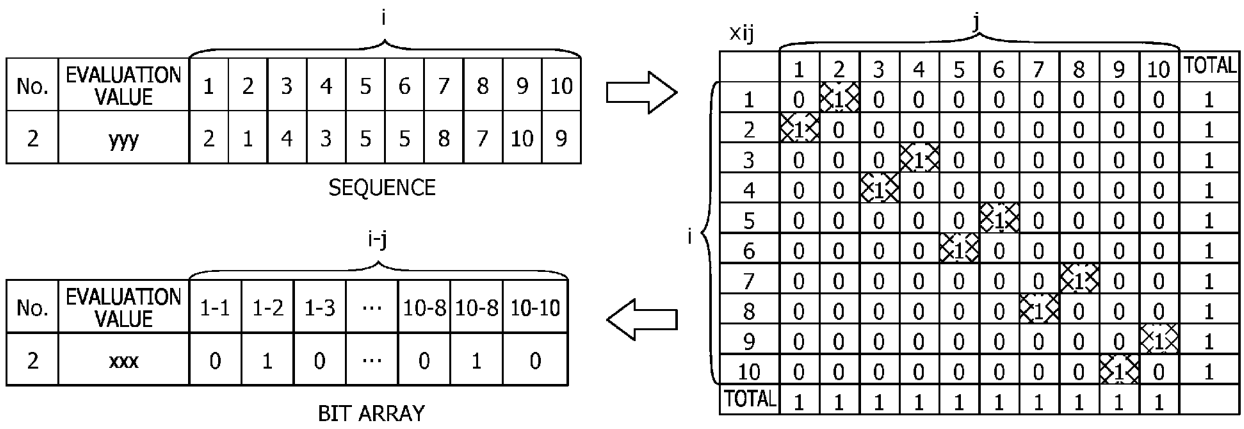


| No. | EVALUATION VALUE | 1 | 2 | 3 | 4 | 5 | 6 | 7 | 8 | 9 | 10 |
|---|---|---|---|---|---|---|---|---|---|---|---|
| 2 | yyy | 2 | 1 | 4 | 3 | 5 | 5 | 8 | 7 | 10 | 9 |

SEQUENCE

| | 1 | 2 | 3 | 4 | 5 | 6 | 7 | 8 | 9 | 10 | TOTAL |
|---|---|---|---|---|---|---|---|---|---|---|---|
| 1 | 0 | 1 | 0 | 0 | 0 | 0 | 0 | 0 | 0 | 0 | 1 |
| 2 | 1 | 0 | 0 | 0 | 0 | 0 | 0 | 0 | 0 | 0 | 1 |
| 3 | 0 | 0 | 0 | 1 | 0 | 0 | 0 | 0 | 0 | 0 | 1 |
| 4 | 0 | 0 | 1 | 0 | 0 | 0 | 0 | 0 | 0 | 0 | 1 |
| 5 | 0 | 0 | 0 | 0 | 0 | 1 | 0 | 0 | 0 | 0 | 1 |
| 6 | 0 | 0 | 0 | 0 | 1 | 0 | 0 | 0 | 0 | 0 | 1 |
| 7 | 0 | 0 | 0 | 0 | 0 | 0 | 0 | 1 | 0 | 0 | 1 |
| 8 | 0 | 0 | 0 | 0 | 0 | 0 | 1 | 0 | 0 | 0 | 1 |
| 9 | 0 | 0 | 0 | 0 | 0 | 0 | 0 | 0 | 0 | 1 | 1 |
| 10 | 0 | 0 | 0 | 0 | 0 | 0 | 0 | 0 | 1 | 0 | 1 |
| TOTAL | 1 | 1 | 1 | 1 | 1 | 1 | 1 | 1 | 1 | 1 | |

| No. | EVALUATION VALUE | 1-1 | 1-2 | 1-3 | ··· | 10-8 | 10-8 | 10-10 |
|---|---|---|---|---|---|---|---|---|
| 2 | xxx | 0 | 1 | 0 | ··· | 0 | 1 | 0 |

BIT ARRAY

FIG. 10

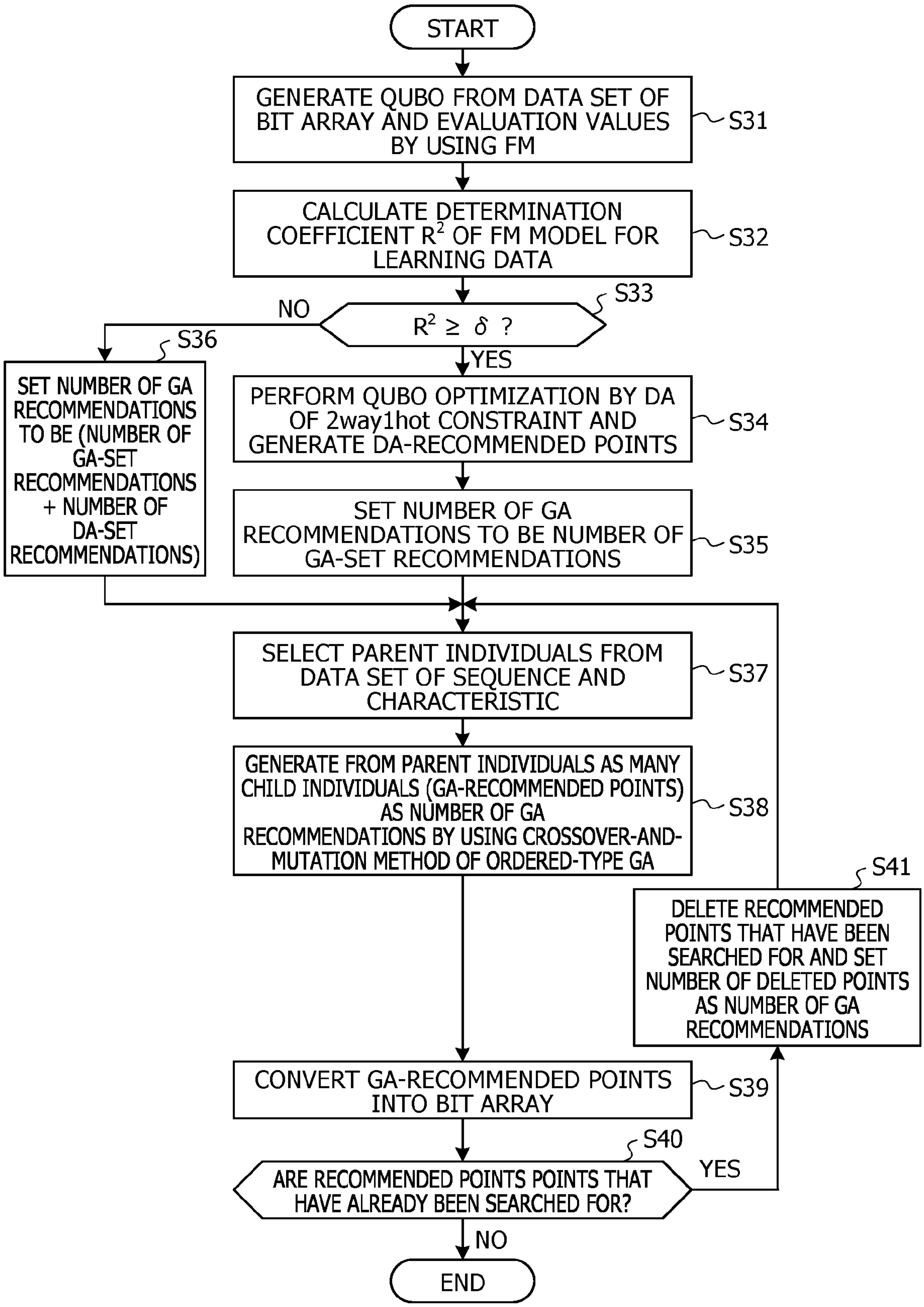
START
GENERATE QUBO FROM DATA SET OF BIT ARRAY AND EVALUATION VALUES BY USING FM
S31
CALCULATE DETERMINATION COEFFICIENT $R^2$ OF FM MODEL FOR LEARNING DATA
S32
$R^2 \geq \delta$ ?
S33
NO
YES
SET NUMBER OF GA RECOMMENDATIONS TO BE (NUMBER OF GA-SET RECOMMENDATIONS + NUMBER OF DA-SET RECOMMENDATIONS)
S36
PERFORM QUBO OPTIMIZATION BY DA OF 2way1hot CONSTRAINT AND GENERATE DA-RECOMMENDED POINTS
S34
SET NUMBER OF GA RECOMMENDATIONS TO BE NUMBER OF GA-SET RECOMMENDATIONS
S35
SELECT PARENT INDIVIDUALS FROM DATA SET OF SEQUENCE AND CHARACTERISTIC
S37
GENERATE FROM PARENT INDIVIDUALS AS MANY CHILD INDIVIDUALS (GA-RECOMMENDED POINTS) AS NUMBER OF GA RECOMMENDATIONS BY USING CROSSOVER-AND-MUTATION METHOD OF ORDERED-TYPE GA
S38
S41
DELETE RECOMMENDED POINTS THAT HAVE BEEN SEARCHED FOR AND SET NUMBER OF DELETED POINTS AS NUMBER OF GA RECOMMENDATIONS
CONVERT GA-RECOMMENDED POINTS INTO BIT ARRAY
S39
S40
ARE RECOMMENDED POINTS POINTS THAT HAVE ALREADY BEEN SEARCHED FOR?
YES
NO
END

FIG. 11A

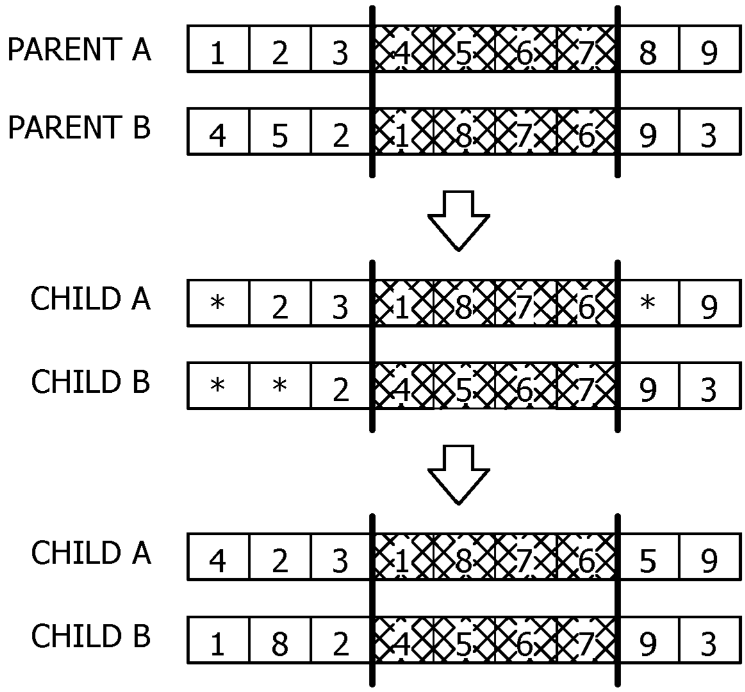


FIG. 11B

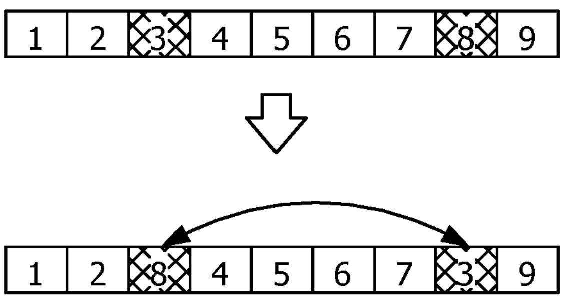

FIG. 12

| No. | EVALUATION VALUE | 1 | 2 | 3 | 4 | 5 | 6 | 7 | 8 | 9 | 10 |
|---|---|---|---|---|---|---|---|---|---|---|---|
| 1 | XXX | 1 | 2 | 3 | 4 | 5 | 6 | 7 | 8 | 9 | 10 |
| 2 | YYY | 2 | 1 | 4 | 3 | 5 | 5 | 8 | 7 | 10 | 9 |
| 3 | ZZZ | 3 | 2 | 1 | 6 | 5 | 4 | 10 | 9 | 8 | 7 |

| No. | 1 | 2 | 3 | 4 | 5 | 6 | 7 | 8 | 9 | 10 |
|---|---|---|---|---|---|---|---|---|---|---|
| 3 | 3 | 2 | 1 | 6 | 5 | 4 | 10 | 9 | 8 | 7 |

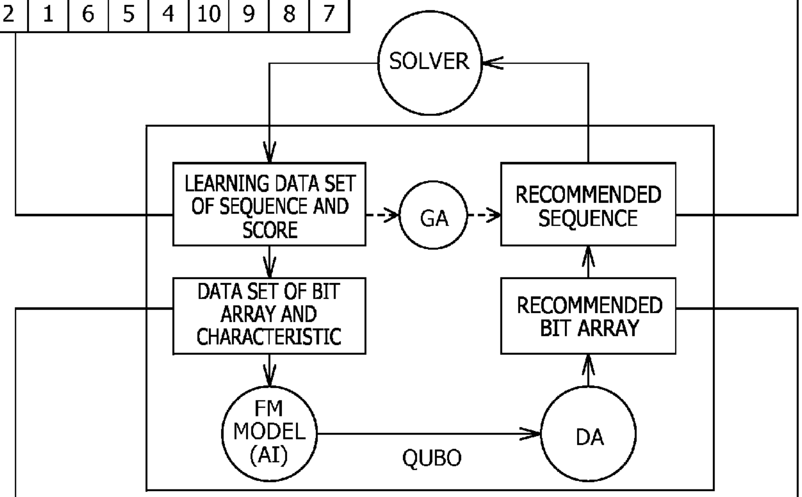


| No. | EVALUATION VALUE | 1-1 | 1-2 | 1-3 | ··· | 10-9 | 10-10 |
|---|---|---|---|---|---|---|---|
| 1 | xxx | 1 | 0 | 0 | ··· | 0 | 1 |
| 2 | YYY | 0 | 1 | 0 | ··· | 1 | 0 |
| 3 | ZZZ | 0 | 0 | 1 | ··· | 0 | 0 |

| No. | 1-1 | 1-2 | 1-3 | ... | 10-9 | 10-10 |
|---|---|---|---|---|---|---|
| 4 | 0 | 0 | 1 | ... | 0 | 0 |

FIG. 13

| | v0 | v1 | v2 | v3 |
|---|---|---|---|---|
| TARGET | 3 | 0 | 1 | 2 |
| | v0 | v1 | v2 | v3 |
| EVALUATION POINT | 3 | 2 | 1 | 6 |

FIG. 14

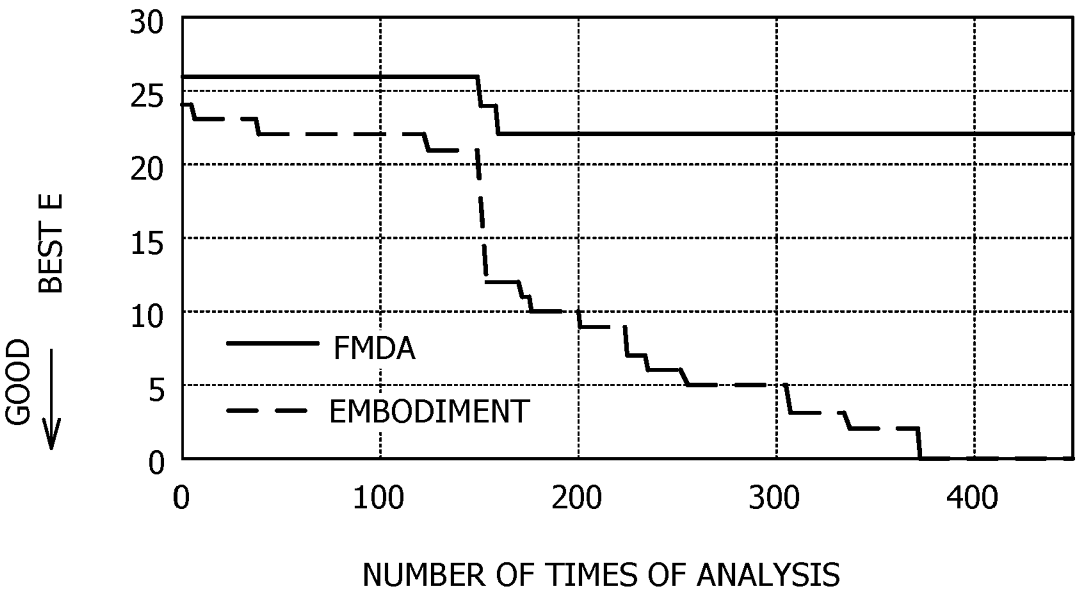
30
25
20
15
10
5
0
0
100
200
300
400
GOOD
BEST E
FMDA
EMBODIMENT
NUMBER OF TIMES OF ANALYSIS

FIG. 15A

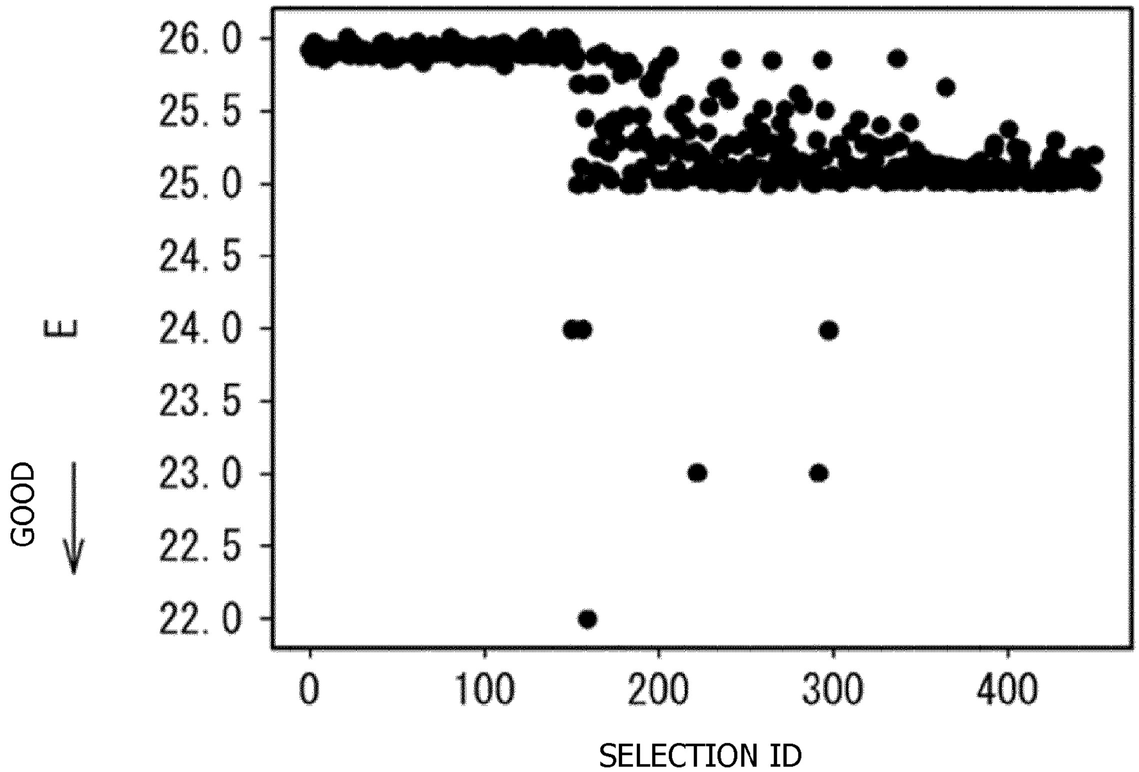


FIG. 15B

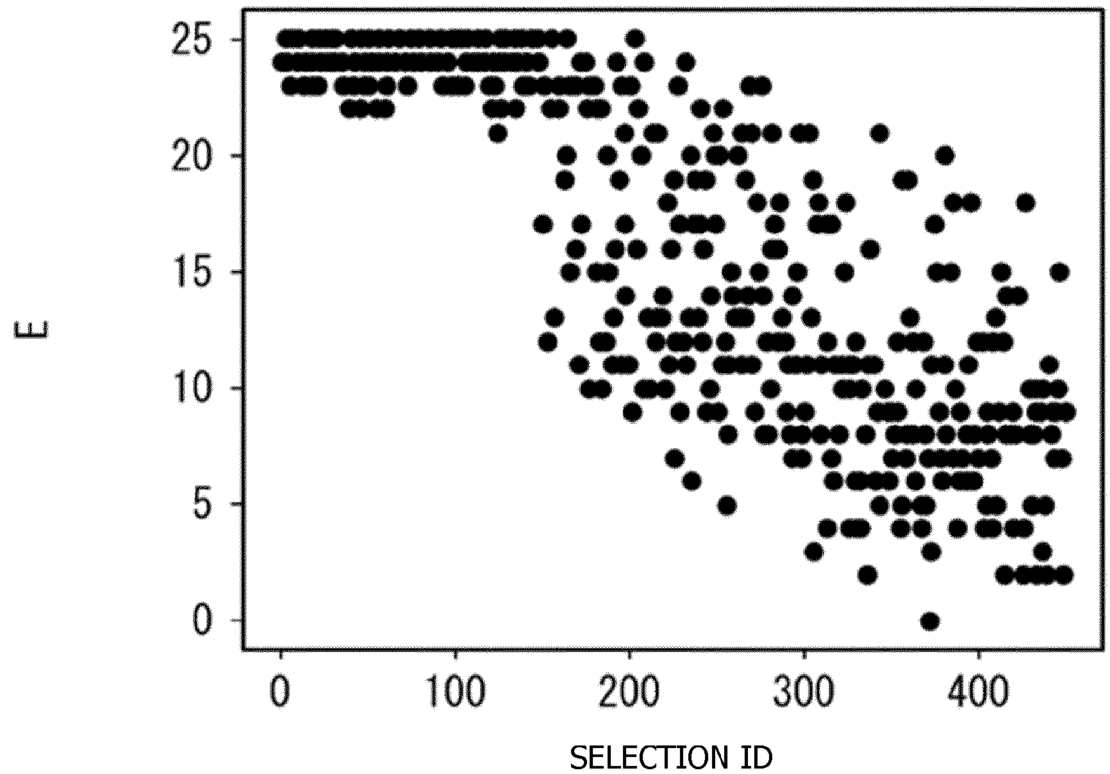

Europäisches Patentamt
European Patent Office
Office européen des brevets

# EUROPEAN SEARCH REPORT

Application Number
EP 24 18 8807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TADAYOSHI MATSUMORI ET AL: "Application of QUBO solver using black-box optimization to structural design for resonance avoidance", ARXIV.ORG, CORNELL UNIVERSITY LIBRARY, 201 OLIN LIBRARY CORNELL UNIVERSITY ITHACA, NY 14853, 20 July 2022 (2022-07-20), XP091275288, DOI: 10.1038/S41598-022-16149-8 * abstract; Sections 1-4; figure 1 * ----- | 1-10 | INV. G06N5/01 G06N3/126 ADD. G06N10/60 |
| A | US 2021/303754 A1 (KANDA KOUICHI [JP] ET AL) 30 September 2021 (2021-09-30) * paragraph [0003] - paragraph [0008]; paragraph [0010]; paragraph [0021] - paragraph [0135]; figures 1, 4, 6 * ----- | 1-10 | |
| A | WILSON BLAKE A ET AL: "Machine learning framework for quantum sampling of highly constrained, continuous optimization problems", APPLIED PHYSICS REVIEWS, AMERICAN INSTITUTE OF PHYSICS, 2 HUNTINGTON QUADRANGLE, MELVILLE, NY 11747, vol. 8, no. 4, 29 December 2021 (2021-12-29), XP012262363, DOI: 10.1063/5.0060481 [retrieved on 2021-12-29] * abstract; Sections I-IV; Appendix A-F; figures 1-2 * ----- -/-- | 1-10 | TECHNICAL FIELDS SEARCHED (IPC) G06N |

1 The present search report has been drawn up for all claims

| Place of search | Date of completion of the search | Examiner |
|---|---|---|
| The Hague | 13 December 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 18 8807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KITAI KOKI ET AL: "Designing metamaterials with quantum annealing and factorization machines", PHYSICAL REVIEW RESEARCH, [Online] vol. 2, no. 1, 16 March 2020 (2020-03-16), XP055848128, DOI: 10.1103/PhysRevResearch.2.013319 Retrieved from the Internet: URL:https://journals.aps.org/prresearch/pdf/10.1103/PhysRevResearch.2.013319> [retrieved on 2024-11-11] * page 1 - page 7; figures 1-2 * ----- | 1-10 | |
| A | EP 4 009 200 A1 (FUJITSU LTD [JP]) 8 June 2022 (2022-06-08) * paragraph [0022] - paragraph [0316]; figures 2,7,8,10 * ----- | 1-10 | |
| | | | TECHNICAL FIELDS SEARCHED (IPC) |

The present search report has been drawn up for all claims

| Place of search | Date of completion of the search | Examiner |
|---|---|---|
| The Hague | 13 December 2024 | Klasen, TJ |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 18 8807

This annex lists the patent family members relating to the patent documents cited in the above-mentioned European search report. The members are as contained in the European Patent Office EDP file on
The European Patent Office is in no way liable for these particulars which are merely given for the purpose of information.

13-12-2024

| Patent document cited in search report | Publication date | Patent family member(s) | Publication date |
|---|---|---|---|
| US 2021303754 A1 | 30-09-2021 | CN 113448378 A | 28-09-2021 |
| | | EP 3886002 A1 | 29-09-2021 |
| | | JP 7410394 B2 | 10-01-2024 |
| | | JP 2021157360 A | 07-10-2021 |
| | | US 2021303754 A1 | 30-09-2021 |
| EP 4009200 A1 | 08-06-2022 | CN 114595549 A | 07-06-2022 |
| | | EP 4009200 A1 | 08-06-2022 |
| | | JP 2022090249 A | 17-06-2022 |
| | | US 2022180210 A1 | 09-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022190752 A
- JP 2021033544 A
- JP 2022045870 A